(19) Europäisches Patentamt
European Patent Office
Office européen des brevets

(11) EP 0 692 567 B1

(12) **EUROPÄISCHE PATENTSCHRIFT**

(45) Veröffentlichungstag und Bekanntmachung des Hinweises auf die Patenterteilung:
**19.02.1997 Patentblatt 1997/08**

(51) Int Cl.6: **D06M 15/643**, C08G 77/26, C08G 77/38

(21) Anmeldenummer: **95110982.6**

(22) Anmeldetag: **13.07.1995**

(54) **Aminofunktionelle Organopolysiloxane**
Amionofunctional organopolysiloxane
Organopolysiloxane aminofonctionnelle

(84) Benannte Vertragsstaaten:
**DE FR GB**

(30) Priorität: **14.07.1994 DE 4424914**

(43) Veröffentlichungstag der Anmeldung:
**17.01.1996 Patentblatt 1996/03**

(73) Patentinhaber: **Wacker-Chemie GmbH
81737 München (DE)**

(72) Erfinder:
- **Bindl, Johann, Dr.
D-84489 Burghausen (DE)**
- **John, Peter, Dr.
D-84489 Burghausen (DE)**
- **Habereder, Peter, Dr.
D-82152 Krailling (DE)**
- **Lautenschlager, Hans, Dr.
D-84533 Haiming (DE)**
- **Nostadt, Konrad
D-72760 Reutlingen (DE)**

(74) Vertreter: **Fritz, Helmut, Dr. et al
Wacker-Chemie GmbH,
Zentralabteilung Patente,
Marken und Lizenzen,
Hanns-Seidel-Platz 4
81737 München (DE)**

(56) Entgegenhaltungen:
**EP-A- 0 306 935**
**EP-A- 0 563 961**
**EP-A- 0 563 962**
**EP-A- 0 577 039**
**US-A- 4 399 247**
**US-A- 4 661 577**
**US-A- 5 039 738**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 692 567 B1

Printed by Jouve, 75001 PARIS (FR)

## Beschreibung

Die Erfindung betrifft aminofunktionelle Organopolysiloxane und deren Verwendung zur Behandlung von Fasern, Garnen, Geweben und Gewirken.

Aminogruppen aufweisende Organopolysiloxane werden schon seit einiger Zeit als Textilausrüstungsmittel eingesetzt. Bei den damit behandelten Textilien werden gute Weichgriffeffekte erreicht. Bislang bevorzugt verwendet werden Organopolysiloxane mit der aminofunktionellen Gruppe

$$-(CH_2)_3NHCH_2CH_2NH_2 .$$

Dies ist beispielsweise in der US-A-4 098 701 beschrieben. Die vorstehende aminofunktionelle Gruppe zeigt jedoch eine starke Neigung zur Thermovergilbung, einer Verfärbung, die durch erhöhte Temperatur beschleunigt wird.

Die Reduzierung der Thermovergilbung durch Modifizierung der Aminogruppen am aminofunktionellen Organopolysiloxan mit organischen Epoxiden ist beispielsweise beschrieben in der EP-A-399 706. Eine wirksamere Reduzierung der Thermovergilbung ist beispielsweise durch Modifizierung mit Acylierungsmitteln, wie Carbonsäuren und deren Anhydriden, beschrieben in EP-A-349 753 und EP-A-349 754 erreichbar.

Aminogruppen aufweisende Organopolysiloxane werden als Textilausrüstungsmittel meist in Form wäßriger Emulsionen eingesetzt. Durch die Modifizierung der Aminogruppen steigen die Viskositäten der meist ohnehin stark viskosen Öle erheblich an. Dies führt zu Schwierigkeiten bei der Emulgierung, da die Viskosität die mechanische Durchmischbarkeit und Homogenisierung beeinträchtigt. Insbesondere weisen die fertigen Emulsionen relativ große Teilchengrößen und breite Teilchengrößenverteilungen auf. Deshalb ist die Lager- und Scherstabilität der Emulsionen häufig unbefriedigend. Bei der Ausrüstung von Textilien führen derartige Emulsionen zu ungleichmäßiger Verteilung des Siliconwirkstoffs auf dem textilen Substrat. Derartige Emulsionen können auch zu Ablagerungen auf Maschinenteilen führen. Durch die Modifizierung der Aminogruppen wird zumeist auch der Weichgriffeffekt der behandelten Textilien verringert.

Es wurden auch aminofunktionelle Organopolysiloxane entwickelt, die gute Weichgriff- und Vergilbungseigenschaften aufweisen, beispielsweise die in der EP-A-441 530 beschriebenen Piperazinylgruppen aufweisenden Organopolysiloxane. Die heterocyclische Aminogruppen enthaltenden Organopolysiloxane sind jedoch schwierig darzustellen und spielen deshalb in der Praxis keine Rolle als Textilausrüstungsmittel.

Der vorliegenden Erfindung liegt die Aufgabe zugrunde, zu stabilen Emulsionen verarbeitbare aminofunktionelle Organopolysiloxane bereitzustellen, die bei der Behandlung von Fasern und Fasermaterialien eingesetzt werden können, wobei die behandelten Fasern und Fasermaterialien einen sehr guten Weichgriff und hervorragende Vernähbarkeit aufweisen und dabei nur eine geringe Neigung zur Vergilbung zeigen.

Die Erfindung betrifft aminofunktionelle Organopolysiloxane, welche aus mindestens einer Siloxaneinheit der allgemeinen Formel (I)

$$R^1{}_aQ_bSiO_{\frac{(4-a-b)}{2}} \qquad (I)$$

und gegebenenfalls Siloxaneinheiten der allgemeinen Formel (II)

$$R^1{}_cSiO_{\frac{(4-c)}{2}} \qquad (II)$$

aufgebaut sind, wobei

$R^1$ gleiche oder verschiedene, einwertige, gegebenenfalls Fluor-, Chlor- oder Brom-substituierte $C_1$- bis $C_{18}$-Kohlenwasserstoffreste, Wasserstoffatome, $C_1$- bis $C_{12}$-Alkoxy- oder Hydroxyreste oder Alkylglykolreste bedeutet,
Q eine Gruppe der allgemeinen Formel (III)

$$-R^2-NR^3\ (CH_2)_mNR^4R^5 \qquad (III)$$

bedeutet, wobei
$R^2$ einen zweiwertigen $C_1$- bis $C_{18}$-Kohlenwasserstoffrest,

$R^3$ ein Wasserstoffatom oder einen gegebenenfalls Fluor-, Chlor- oder Brom-substituierten $C_1$- bis $C_{10}$-Alkylrest,
$R^4$ einen gegebenenfalls Fluor-, Chlor- oder Brom-substituierten $C_1$- bis $C_{10}$-Alkylrest,
$R^5$ einen gegebenenfalls Fluor-, Chlor- oder Brom-substituierten $C_1$- bis $C_{10}$-Alkylrest,
a die Werte 0, 1 oder 2,
b die Werte 1, 2 oder 3,
c die Werte 0, 1, 2 oder 3 und
m die Werte 2, 3 oder 4 bedeuten,

und die Summe aus a und b maximal 3 beträgt.

Beispiele für $C_1$- bis C18-Kohlenwasserstoffreste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Die vorstehenden Kohlenwasserstoffreste enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste mit aliphatischer Doppelbindung sind der Vinyl-, Allyl-, und 5-Hexen-1-ylrest.

Vorzugsweise enthalten jedoch höchstens 1 % der Kohlenwasserstoffreste $R^1$ eine Doppelbindung.

Beispiele für mit Fluor-, Chlor- oder Bromatomen substituierte $C_1$- bis $C_{18}$-Kohlenwasserstoffreste sind der 3,3,3-Trifluor-n-propylrest, der 2,2,2,2',2',2'-Hexafluorisopropylrest, der Heptafluorisopropylrest, und der o-, m-, und p-Chlorphenylrest.

Beispiele für $C_1$- bis $C_{10}$-Alkylreste $R^3$, $R^4$ und $R^5$ sind die vorstehend bei $R^1$ aufgeführten Beispiele für lineare und cyclische Alkylreste und für mit Fluor-, Chlor- oder Bromatomen substituierten $C_1$- bis $C_{10}$-Alkylreste.

Beispiele für die zweiwertigen $C_1$- bis $C_{18}$-Kohlenwasserstoffreste $R^2$ sind gesättigte gerad- oder verzweigtkettige oder cyclische Alkylenreste wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste wie der Hexenylenrest und Phenylenreste, wobei der n-Propylenrest und der 2-Methylpropylenrest besonders bevorzugt sind.

Die Alkoxyreste sind über ein Sauerstoffatom gebundene vorstehend beschriebene Alkylreste. Die Beispiele für Alkylreste gelten im vollen Umfang auch für die Alkoxyreste.

Die Alkylglykolreste $R^1$ weisen vorzugsweise die allgemeine Formel (IV)

$$-R^2-[O(CHR^3)_d]_nOR^8 \qquad (IV)$$

auf, in der $R^2$, $R^3$ und d die vorstehenden Bedeutungen haben, n den Wert 1 bis 100 hat und $R^8$ ein Wasserstoffatom, einen Rest $R^3$ oder eine Gruppe der allgemeinen Formel

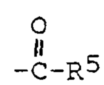

bedeutet, wobei $R^5$ den Rest $R^3$ oder O-$R^3$ bedeutet.

In den vorstehenden allgemeinen Formeln (I) bis (IV) bedeuten vorzugsweise, unabhängig voneinander:

**$R^1$** einen Methyl-, Phenyl-, $C_1$- bis $C_3$-Alkoxy- oder Hydroxyrest oder einen Rest der allgemeinen Formel IV,
**$R^2$** einen zweiwertigen $C_2$- bis $C_6$-Kohlenwasserstoffrest,
**$R^3$** ein Wasserstoffatom,
**$R^4$** einen $C_2$- bis $C_6$-Alkylrest,
**$R^5$** einen $C_2$- bis $C_6$-Alkylrest,
**a** die Werte 0 oder 1,
**b** den Wert 1,
**c** die Werte 2 oder 3,
**d** den Wert 2 und

**m** die Werte 2 oder 3.

Bevorzugt als Gruppe Q sind

$$(CH_3)_2NCH_2CH_2NH(CH_2)_3\text{-},$$

$$(CH_3)_2NCH_2CH_2CH_2NH(CH_2)_3\text{-},$$

$$(CH_3CH_2)_2N(CH_2)_2NH(CH_2)_3\text{-}$$

und

$$(CH_3CH_2CH_2)_2N(CH_2)_2NH(CH_2)_3\text{-}.$$

Bevorzugt sind die aminofunktionellen Organopolysiloxane, die neben Einheiten der allgemeinen Formel I auch Einheiten der allgemeinen Formel II aufweisen.

Bevorzugte aminofunktionelle Organopolysiloxane sind lineare Polydimethylsiloxane, die Siloxaneinheiten der allgemeinen Formel I und gegebenenfalls $C_1$- bis $C_3$-Alkoxy- oder Hydroxyendgruppen aufweisen.

Vorzugsweise beträgt das Verhältnis der Siloxaneinheiten der allgemeinen Formel I zu den Siloxaneinheiten der allgemeinen Formel II 1 : 10 bis 30 000, insbesondere 1 : 20 bis 300. Die Amingehalte betragen vorzugsweise 0,001 bis 2 mequiv/g, insbesondere 0,1 bis 1,0 mequiv/g, gemessen als Verbrauch an In Salzsäure in ml/g aminofunktionelles Organopolysiloxan bei der Titration bis zum Neutralpunkt.

Die aminofunktionellen Organopolysiloxane haben vorzugsweise eine durchschnittliche Viskosität von 50 bis 100000 mPa·s, insbesondere 100 bis 25000 mPa·s, bei 25°C.

Vorzugsweise werden die aminofunktionellen Organopolysiloxane hergestellt, indem Silane der allgemeinen Formel V

$$R^1{}_aQ_bSiOR^6_e \qquad (V)$$

gegebenenfalls zusammen mit Organosiliciumverbindungen umgesetzt werden, welche ausgewählt werden aus

a) Silanen der allgemeinen Formel VI

$$R^1{}_cSiOR^6_f \qquad (VI)$$

und

b) Siloxanen, die aufgebaut sind aus Siloxaneinheiten der allgemeinen Formel VII

$$R^1{}_g(OR^6)_hSiO_{\frac{(4-g-h)}{2}} \qquad (VII)$$

und Siloxaneinheiten der vorstehenden allgemeinen Formel II,

wobei

**$R^6$** ein Wasserstoffatom oder einen gegebenenfalls Fluor-, Chlor- oder Brom-substituierten $C_1$- bis $C_{10}$-Alkylrest,
**e** die Werte 1, 2 oder 3,
**f** die Werte 1, 2, 3 oder 4,
**g** die Werte 0, 1 oder 2,
**h** die Werte 1, 2 oder 3 bedeuten und

**$R^1$, Q, a, b** und **c** die vorstehenden Bedeutungen aufweisen.

Beispiele für $C_1$- bis $C_{18}$-Kohlenwasserstoffreste **$R^6$** sind die vorstehend bei **$R^1$** aufgeführten Beispiele für lineare und cyclische Alkylreste und für mit Fluor-, Chlor- oder Bromatomen substituierten $C_1$- bis $C_{18}$-Alkylreste. Bevorzugt sind die unsubstituierten $C_1$- bis $C_3$-Alkylreste und Wasserstoffatome.

Die aminofunktionellen Organopolysiloxane, die neben Einheiten der allgemeinen Formel I auch Einheiten der allgemeinen Formel II aufweisen, werden vorzugsweise hergestellt, indem zuerst Silane der allgemeinen Formel V zu einem oligomeren Hydrolysat umgesetzt werden und anschließend das oligomere Hydrolysat mit Siloxanen, die aufgebaut sind aus Siloxaneinheiten der allgemeinen Formel VII und Siloxaneinheiten der vorstehenden allgemeinen Formel II umgesetzt wird.

Die Siloxane, die aufgebaut sind aus Siloxaneinheiten der allgemeinen Formel VII und Siloxaneinheiten der vorstehenden allgemeinen Formel II können linear, verzweigt oder cyclisch sein.

Das Verfahren kann in Anwesenheit oder in Abwesenheit von Lösungsmitteln durchgeführt werden. Beispiele für geeignete Lösungsmittel sind Alkohole, wie Methanol, Ethanol, n-Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon; Schwefelkohlenstoff und Nitrobenzol, oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden.

Beim vorstehenden Verfahren können an sich bekannte, die Kondensations- sowie die Äquilibrierungsreaktion fördernde Katalysatoren eingesetzt werden. Bevorzugt sind basische Katalysatoren, wie Alkalihydroxide, insbesondere Natrium-, Kalium- und Cäsiumhydroxid, Alkalialkoholate, quaternäre Ammoniumhydroxide, wie Tetramethylammoniumhydroxid, Benzyltrimethylammoniumhydroxid, Benzyltriethylammoniumhydroxid, Benzyltrimethylammoniumbutylat, β-Hydroxyethyltrimethylammonium-2-ethylhexoat, quaternäre Phosphoniumhydroxide, wie Tetra-n-butylphosphoniumhydroxid und Tri-n-butyl-3-[tris-(trimethylsiloxy)silyl]-n-propyl-phosphoniumhydroxid, Alkalisiloxanolate und Ammoniumorganosiloxanolate, wie Benzyltrimethylammoniumsiloxanolat und Tetramethylammoniumsiloxanolat.

Beim vorstehenden Verfahren werden vorzugsweise 10 ppm bis 1%, insbesondere 50 bis 1000 ppm an Katalysator, jeweils bezogen auf das Gewicht der eingesetzten Organosiliciumverbindungen verwendet.

Das Verfahren wird vorzugsweise bei Temperaturen von 80 bis 200°C, besonders bevorzugt 100 bis 150°C und insbesondere 100 bis 130°C durchgeführt.

Die aminofunktionellen Organopolysiloxane und Organosilane können auch durch Addition von Si-H Gruppen aufweisenden Organopolysiloxanen und Organosilanen mit aminofunktionellen Alkenen der allgemeinen Formel (VIII)

$$H_2C=CH_2-R^7-NR^3(CH_2)_mNR^4R^5 \qquad (VIII)$$

in Gegenwart einer Platinverbindung hergestellt werden, wobei
**$R^7$** einen zweiwertigen $C_1$- bis $C_{16}$-Kohlenwasserstoffrest bedeutet und **$R^3$**, **$R^4$**, **$R^5$** und **m** die vorstehenden Bedeutungen aufweisen.

Die aminofunktionellen Organopolysiloxane und Organosilane können ferner durch Umsetzung von Chlor- oder Brom-substituierten Alkylgruppen aufweisenden Organopolysiloxanen und Organosilanen mit Diaminen der allgemeinen Formel (IX)

$$HNR^3(CH_2)_mNR^4R^5 \qquad (IX)$$

hergestellt werden, wobei
**$R^3$**, **$R^4$**, **$R^5$** und **m** die vorstehenden Bedeutungen aufweisen.

Die aminofunktionellen Organopolysiloxane werden vorzugsweise in Form wäßriger Emulsionen eingesetzt. Die Emulsionen weisen kleine Teilchengrößen auf. Deshalb ist die Lager- und Scherstabilität der Emulsionen sehr gut.

Ein geeignetes Verfahren zur Herstellung von feinteiligen Organopolysiloxanemulsionen ist beispielsweise bekannt aus US-A-5,302,657. Dort wird die Emulsion mit einem im Organopolysiloxan löslichen Emulgator in 2 Schritten hergestellt, wobei im ersten Schritt ein Konzentrat erhalten wird, welches im zweiten Schritt mit Wasser verdünnt wird.

Als Emulgatoren können beliebige für die Herstellung von aminofunktionellen Organopolysiloxanemulsionen verwendbare Emulgatoren eingesetzt werden.

Als anionische Emulgatoren eignen sich besonders:

1. Alkylsulfate, besonders solche mit einer Kettenlänge von 8 bis 18 C-Atomen und Alkylethersulfate mit 8 bis 18 C-Atomen im hydrophoben Rest und 1 bis 40 Ethylenoxid(EO)- bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C- Atomen; ggf. können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Alkylpolyglycolether, vorzugsweise solche mit 4 bis 40 EO-Einheiten und Alkylresten von 8 bis 20 C-Atomen.

6. Alkylarylpolyglycolether, vorzugsweise solche mit 4 bis 40 EO-Einheiten und 8 bis 20 C-Atomen in den Alkyl- und Arylresten.

7. Ethylenoxid/Propylenoxid(EO/PO)-Blockcopolymere, vorzugsweise solche mit 4 bis 40 EO- bzw. PO-Einheiten.

8. Fettsäuren mit 6 bis 24 C-Atomen.

9. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

10. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:

11. Salze von primären, sekundären und tertiären Fettaminen mit 8 bis 24 C-Atomen mit Essigsäure, Schwefelsäure, Salzsäure und Phosphorsäuren.

12. Quarternäre Alkylbenzolammoniumsalze, insbesondere solche, deren Alkylgruppe 6 bis 24 C-Atome besitzt, insbesondere die Halogenide, Sulfate, Phosphate und Acetate.

13. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Ferner eignen sich als Emulgatoren zur Herstellung der Emulsionen Fettsäurepolyglykolester, polyethoxylierte Fettsäureglyceride und Sorbitanester, Alkylpolyglycoside, Fettsäurealkylolamide, Alkylethercarbonsäuren, Alkarylethercarbonsäuren, ethoxylierte quarternäre Ammoniumsalze, Aminoxide, Betaine, Sulfobetaine und Sulfosuccinate.

Die fertigen Emulsionen bestehen aus einer diskontinuierlichen Ölphase, die das aminofunktionelle Organopolysiloxan umfaßt, den Emulgatoren und der kontinuierlichen Wasserphase (Öl-in-Wasser-Emulsion).

Die Gewichtsverhältnisse der diskontinuierlichen Ölphase und der kontinuierlichen Wasserphase können in weiten Bereichen variiert werden. In der Regel beträgt der Anteil der Ölphase 5 bis 60 Gew.-%, vorzugsweise 10 bis 40 Gew.-%, jeweils bezogen auf das Gesamtgewicht der Emulsion. Der Anteil an Emulgatoren liegt vorzugsweise im Bereich von 5 bis 150 Gew.-%, insbesondere 10 bis 100 Gew.-%, jeweils bezogen auf das Gewicht der Ölphase.

Bei sinkender mittlerer Teilchengröße steigt nicht nur die Lagerstabilität und Scherstabilität, sondern es wird auch beispielsweise bei der Ausrüstung von Textilien die maschinelle Verarbeitbarkeit verbessert, eine gleichmäßigere Verteilung auf dem textilen Substrat erreicht und eine bessere Penetration in das Substrat bewirkt.

Die Emulsion des aminofunktionellen Organopolysiloxans kann für bestimmte Zwecke, beispielsweise für den Einsatz als Textilbehandlungsmittel, neben den vorstehenden Bestandteilen Zusatzstoffe enthalten. Geeignete Zusatzstoffe sind beispielsweise Biozide, wie Fungizide, Bakterizide, Algicide und Mikrobicide, Verdickungsmittel, Frostschutzmittel, Antistatika, Farbstoffe, Flammschutzmittel und organische Weichmacher.

Die Emulsion ist sehr gut lagerfähig und gut verdünnbar und kann zur Behandlung von Fasern, wie Fäden und Garnen, und daraus hergestellten textilen Gebilden, wie Vliesen, Matten, Strängen, gewebten, gewirkten oder gestrickten Textilien, die auch bisher mit Organosiliciumverbindungen imprägniert werden konnten, verwendet werden. Beispiele für Fasern, die imprägniert werden können, sind somit solche aus Keratin, insbesondere Wolle, Mischpolymere von Vinylacetat, Baumwolle, Rayon, Hanf, natürliche Seide, Polypropylen, Polyethylen, Polyester, Polyurethan, Polyamid, Cellulose, Viskose und Celluloseacetat und Gemische aus mindestens zwei solcher Fasern. Wie aus der vorstehenden Aufzählung ersichtlich, können die Fasern natürlicher oder synthetischer Herkunft sein. Die Textilien können in Form von Stoffbahnen oder Kleidungsstücken bzw. Teilen von Kleidungsstücken vorliegen.

Bei Keratin, insbesondere Wolle, kann durch Imprägnierung mit der als Textilbehandlungsmittel verwendeten Zusammensetzung oder deren Umsetzungsprodukt, vor allem, wenn das Keratin mit Chlor vorbehandelt, gespült und neutralisiert wurde, das Schrumpfen und Verfilzen vermindert werden.

Die Emulsion wird dabei auf die zu imprägnierende Faser oder das textile Gebilde aufgetragen. Die Emulsion kann, falls erforderlich, auf eine geeignete Anwendungskonzentration verdünnt werden. Zum Auftragen kann die Emulsion noch mit anderen Additiven, wie organischen Weichmachern, Wachsdispersionen und Katalysatoren, insbesondere Kondensationskatalysatoren, versetzt werden.

Das Auftragen auf die zu imprägnierenden Fasern und textilen Gebilde kann in beliebiger für die Imprägnierung von Fasern geeigneter und vielfach bekannter Weise erfolgen, z. B. durch Ausziehen, Tauchen, Streichen, Gießen, Sprühen, einschließlich Sprühen aus Aerosolverpackung, Aufwalzen, Klotzen oder Drucken.

Vorzugsweise wird die Emulsion in solchen Mengen aufgetragen, daß die Gewichtszunahme der Faser durch diese Zusammensetzung, abzüglich der dabei gegebenenfalls mitverwendeten Verdünnungsmittel, 0,1 bis 10 Gew.-%, vorzugsweise 0,5 bis 4 Gew.-%, bezogen auf das Gewicht der Faser, beträgt.

Die mit der Emulsion behandelten Fasern und textilen Gebilde weisen einen angenehmen weichen Griff auf, sind besonders beständig gegen Thermovergilbung und weisen vorteilhafte mechanische Eigenschaften auf. Beispielsweise sind die behandelten Textilien sehr gut vernähbar.

In den folgenden Beispielen beziehen sich alle Angaben von Teilen und Prozentsätzen auf das Gewicht, soweit nichts anderes angegeben ist.

**Beispiele**

Beispiel 1:

**Herstellung des aminofunktionellen Silans A folgender Struktur:**

$$(MeO)_2SiMe(CH_2)_3NHCH_2CH_2N(CH_2CH_3)_2$$

465g (4 mol) N,N-Diethylethylendiamin werden vorgelegt und unter Stickstoff auf 140-150°C aufgeheizt. Anschließend werden 182,4g (1 mol) 3-Chlorpropylmethyldimethoxysilan im Verlauf von ca. 30 min zudosiert und noch weitere 4 h bei 140°C gerührt. Nun wird auf 80°C abgekühlt und entstandene, als Hydrochlorid gebundene HCl wird durch Umsalzen mit Ethylendiamin entfernt. Anschließende fraktionierte Destillation liefert bei einem Siedepunkt von ca. 90°C / 2 mbar 80-90% des Silans A mit folgenden analytischen Daten:

| | |
|---|---|
| Aussehen: | Farblose bis gelbliche Flüssigkeit |
| Reinheit (GC): | > 95% |
| Amingehalt: | 7,6 mequiv/g |

Beispiel 2

**Hydrolyse des Silans A zum oligomeren Hydrolysat B**

260g (1 mol) des Silans A werden unter Stickstoff mit 90g (5 mol) Wasser versetzt und auf 90°C erhitzt. Unter Rühren wird bei dieser Temperatur freiwerdendes Methanol abdestilliert. Nach Beendigung der Methanolentwicklung wird überschüssiges Wasser unter vermindertem Druck (10 mbar) bei einer Temperatur von 100°C entfernt. Man erhält ca. 220g eines fast farblosen öles mit folgenden analytischen Daten:

| | |
|---|---|
| Viskosität (25°C): | 500 $mm^2/s$ |
| Amingehalt: | 8,78 mequiv/g |

$^1H$ und $^{29}Si$-NMR: Mischung aus linearen und cyclischen Siloxanen frei von Methoxygruppen

Beispiele 3 bis 6:

Herstellung aminofunktioneller Polysiloxane C-F

Beispiel 3

Eine Mischung aus 1000g eines OH-endständigen Polydimethylsiloxans, 140g eines $Me_3SiO$-endständigen Polydimethylsiloxans mit Kettenlänge 35 und 76g des Hydrolysats B wird unter Stickstoff auf 80°C erhitzt und mit 1,8g einer 40%-igen Lösung von Benzyltrimethylammoniumhydroxid (BTAH) in Methanol versetzt. Anschließend wird 6 h bei 100°C unter vermindertem Druck (200 mbar) gerührt, wobei gleichzeitig entstehendes Kondensationswasser entfernt wird. Nun wird für 1 Stunde auf 150°C bei einem Vakuum von 5 mbar erhitzt, wobei der Katalysator BTAH desaktiviert und flüchtige Bestandteile entfernt werden. Nach Filtration erhält man ein farbloses Öl mit folgenden Eigenschaften (Aminosiloxan C):

| | |
|---|---|
| Viskosität (25°C): | 850 mPa·s |
| Amingehalt: | 0,60 mequiv/g |
| Struktur ($^1H$/$^{29}Si$-NMR) : | |

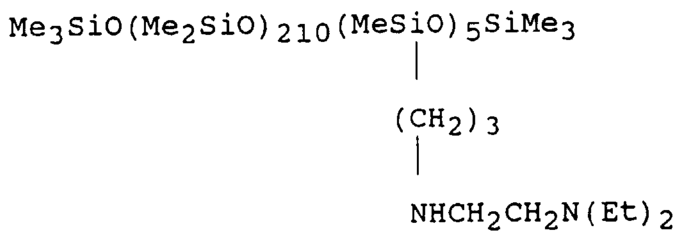

Beispiel 4

Eine Mischung aus 1000g eines OH-endständigen Polydimethylsiloxans, 140g eines $Me_3SiO$-endständigen Polydimethylsiloxans mit Kettenlänge 35 und 38g des Hydrolysats B wird unter Stickstoff auf 80°C erhitzt und mit 1,8g einer 40%igen BTAH-Lösung in Methanol versetzt. Nun wird 6 h bei 100°C und einem verminderten Druck von ca. 200 mbar gerührt und dabei Kondensationswasser entfernt. Anschließend wird der Druck auf ca. 5 mbar reduziert und für 1 h auf 150°C erhitzt. Dabei erfolgt die BTAH-Desaktivierung und die Entfernung flüchtiger Bestandteile. Nach Filtration erhält man ein farbloses Öl mit folgenden Eigenschaften (Aminosiloxan D):

| | |
|---|---|
| Viskosität (25°C): | 940 mPa·s |
| Amingehalt: | 0,31 mequiv/g |
| Struktur ($^1H$/$^{29}Si$-NMR) : | |

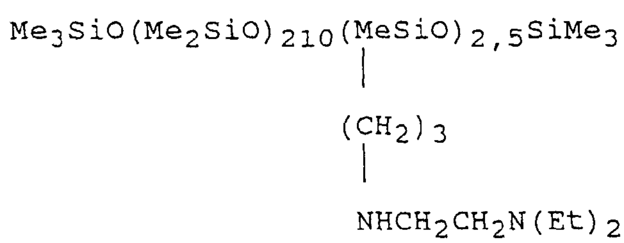

Beispiel 5

Eine Mischung aus 1000g eines OH-endständigen Polydimethylsiloxans, 50g eines $Me_3SiO$-endständigen Polydimethylsiloxans mit einer Kettenlänge 35 und 46g des Hydrolysats B wird unter Stickstoff auf 80°C erhitzt und mit 1,6g einer 40%-igen BTAH-Lösung in Methanol versetzt. Nun wird für 6 h bei 100°C und einem verminderten Druck von ca. 200 mbar gerührt, wobei entstehendes Kondensationswasser entfernt wird. Anschließend wird der Druck auf 5 mbar reduziert und für 1 h auf 150°C erhitzt. Dabei erfolgt die BTAH-Desaktivierung und die Entfernung flüchtiger

Bestandteile. Nach Filtration erhält man ein farbloses Öl mit folgenden Eigeschaften (Aminosiloxan E):

| | |
|---|---|
| Viskosität (25°C) : | 9500 mPa·s |
| Amingehalt: | 0,40 mequiv/g |
| Struktur ($^{1}H^{29}Si$-NMR): | |

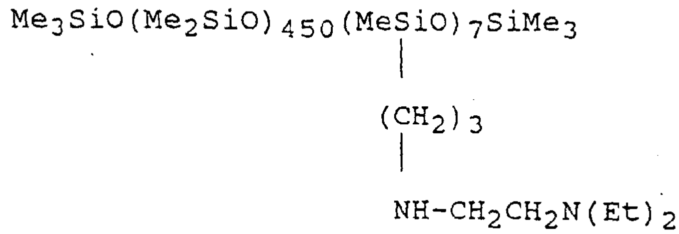

Beispiel 6

Eine Mischung aus 1000g eines OH-endständigen Polydimethylsiloxans und 53g des Silans A wird mit 0,53g einer 40%-igen BTAH-Lösung in Methanol versetzt und bei einem verminderten Druck von 200 mbar für 5 h auf 80°C erhitzt, wobei flüchtige Bestandteile abdestilliert werden. Anschließend wird bei einem Druck von 60 mbar für 1 h auf 150°C aufgeheizt und dabei der Katalysator BTAH desaktiviert und flüchtige Bestandteile entfernt. Man erhält ein farbloses Öl mit folgenden Eigenschaften (Aminosiloxan F):

| | |
|---|---|
| Viskosität (25°C): | 8700 mPa·s |
| Amingehalt: | 0,39 mequiv/g |
| Struktur ($^{1}H/^{29}Si$-NMR): | |

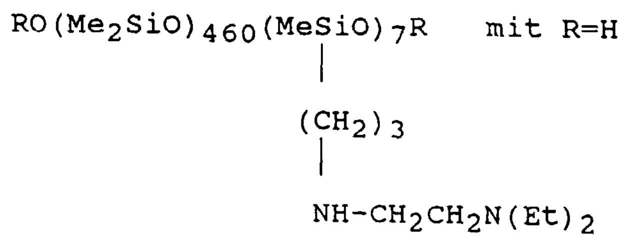 mit R=H,Me

Beispiel 7

Herstellung nichtionogener O/W-Emulsionen der Aminosiloxane C-F und der als Vergleich dienenden nicht erfindungsgemäßen aminofuktionellen siliconöle G und H mit folgenden Strukturen:

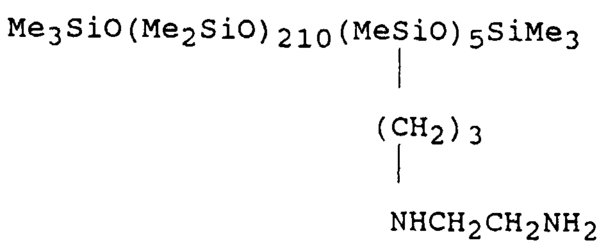 Aminosiloxan G

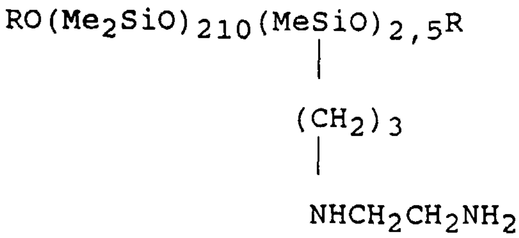

Aminosiloxan H

mit R = Me, H

nach folgender Standardrezeptur:

Die aminofunktionellen Siliconöle werden mit der notwendigen Menge an Emulgator Genapol[R] X060 (Isotridecylalkoholpolyglycolether mit 6 Ethylenoxydeinheiten der Firma Hoechst AG) gemischt und nach Zugabe von Essigsäure mit einem hochtourigen Mischer unter portionsweiser Wasserzugabe emulgiert. Die nachfolgende Tabelle I zeigt die Emulsionszusammensetzungen und deren Bezeichnung

| | erfindungsgemäße Organopolysiloxane | | | | Vergleich | |
|---|---|---|---|---|---|---|
| Emulsionen | I | J | K | L | M | N |
| Aminosiloxan 170 Teile | C | D | E | F | G | H |
| Genapol[R]X060 | 60T | 60T | 60T | 60T | 60T | 60T |
| Essigsäure | 3,8T | 1,9T | 2,5T | 2,5T | 3,8T | 1,9T |
| Wasser | 766T | 768T | 767,5T | 767,5T | 766T | 768T |
| (T = Teile) | | | | | | |

Beispiel 8

Anwendungstechnische Beurteilung

Die erhaltenen Emulsionen I-N wurden hinsichtlich folgender Eigenschaften geprüft:

**a) Scherstabilität:**

Jeweils 20g der zu testenden Emulsionen I-N wurden mit Wasser auf ein Gesamtvolumen von 11 verdünnt. Anschließend wurden die so hergestellten Testlösungen, die einen pH-Wert von 5,5 aufwiesen, bei 40°C 1 Minute lang durch schnelles Rühren auf ihre Scherstabilität hin (mit einem Schnellrührer mit 20 000 UpM, Ultra Turrax[R] von Janke & Kunkel) geprüft. Beurteilt wurde das Aussehen nach dem Schertest anhand einer relativen Skala, wobei folgende Wertung vorgenommen wurde:

1 Flotte unverändert
2 Flotte schwach trüb, keine Haut
3 Flotte stark trüb, keine Haut
4 Flotte stark trüb mit leichter Hautbildungstendenz nach Schaumzerfall
5 Flotte stark trüb mit ausgeprägter Hautbildungsstendenz nach Schaumzerfall

**b) Textilausrüstung:**

Die zu testenden Emulsionen wurden mit Wasser auf einen Festgehalt von 0,5 % verdünnt und durch Tauchen und anschließendes Abquetschen auf weißes Baumwollgewebe aufgebracht. Das Abquetschen wurde derart durchgeführt, daß eine Flüssigkeitsaufnahme von 75 %, bezogen auf das Baumwollgewicht, erreicht wurde. Anschließend wurden die so imprägnierten Baumwollgewirke 5 Minuten bei 150°C getrocknet und folgenden anwendungstechnischen Prüfungen unterzogen:

Griffbeurteilung

Die Beurteilung erfolgte in einem Handtest nach einer relativen Skala von 0 - 10, wobei der Wert 10 den besten Weichgriff darstellt.

Vergilbung

Der Grad der Vergilbung wurde mit einem Farbmeßgerät (Minolta Chromameter CR 200) festgestellt. Der gemessene Gelbwert b+ wurde mit der unbehandelten Probe als Referenz verglichen und als Δb+ festgehalten:

$$\Delta b+ = b+ \text{ (Probe)} - b+ \text{ (Referenz)}$$

Abnehmende Vergilbung bedeutete kleinere Δb+ Werte.

Vernähbarkeitstest:

Vernäht wurde mit dem ITV-Nähcomputer (System: Institute für Textilindustrie, Denkendorf). Hierbei wird die Einstichkraft (in cN) gemessen, die aufgewendet werden muß zum Durchdringen der Nadel durch das Textilsubstrat. Pro Messung werden dabei die Einstichkräfte von 50 Einstichen erfaßt und stati stisch ausgewertet. Geringere Werte lassen auf eine geringere Gefahr von Nähschäden schließen, zeigen somit eine bessere Vernähbarkeit an (Angaben sind Mittelwerte aus jeweils fünf Messungen).

Die erhaltenen Ergebnisse sind in nachfolgender Tabelle II gegenübergestellt:

| | erfindungsgemäße Organopolysiloxane | | | | Vergleich | | |
|---|---|---|---|---|---|---|---|
| Emulsion | I | J | K | L | M | N | unbehandelt |
| Scherstabilität | 3 | 3 | 3 | 3 | 5 | 5 | --- |
| Weichgriff | 7 | 7 | 9 | 10 | 5 | 6 | 0 |
| Vergilbung Δb+ | 0,95 | 0,37 | 0,52 | 0,48 | 3,41 | 1,57 | 0 |
| Vernähbarkeitstest (cN) | 195 | 173 | 171 | 177 | 215 | 204 | 425 |

**Patentansprüche**

**1.** Aminofunktionelle Organopolysiloxane, welche aus mindestens einer Siloxaneinheit der allgemeinen Formel (I)

$$R^1{}_a Q_b SiO_{\frac{(4-a-b)}{2}} \quad (I)$$

und gegebenenfalls Siloxaneinheiten der allgemeinen Formel (II)

$$R^1{}_c SiO_{\frac{(4-c)}{2}} \quad (II)$$

aufgebaut sind, wobei

**$R^1$** gleiche oder verschiedene, einwertige, gegebenenfalls Fluor-, Chlor- oder Brom-substituierte $C_1$- bis $C_{18}$-Kohlenwasserstoffreste, Wasserstoffatome, $C_1$- bis $C_{12}$-Alkoxy- oder Hydroxyreste oder Alkylglykolreste bedeutet,

**Q** eine Gruppe der allgemeinen Formel (III)

$$-R^2-NR^3(CH_2)_mNR^4R^5 \quad (III)$$

bedeutet, wobei

**$R^2$** einen zweiwertigen $C_1$- bis $C_{18}$-Kohlenwasserstoffrest,

**$R^3$** ein Wasserstoffatom oder einen gegebenenfalls Fluor-, Chlor- oder Brom-substituierten $C_1$- bis $C_{10}$-Alkylrest,

**$R^4$** einen gegebenenfalls Fluor-, Chlor- oder Brom-substituierten $C_1$- bis $C_{10}$-Alkylrest,

**$R^5$** einen gegebenenfalls Fluor-, Chlor- oder Brom-substituierten $C_1$- bis $C_{10}$-Alkylrest,

**a** die Werte 0, 1 oder 2,
**b** die Werte 1, 2 oder 3,
**c** die Werte 0, 1, 2 oder 3 und
**m** die Werte 2, 3 oder 4 bedeuten,

und die Summe aus a und b maximal 3 beträgt.

**2.** Aminofunktionelle Organopolysiloxane nach Anspruch 1, bei denen

**$R^4$** einen $C_2$- bis $C_6$-Alkylrest und
**$R^5$** einen $C_2$- bis $C_6$-Alkylrest bedeuten.

**3.** Aminofunktionelle Organopolysiloxane nach Anspruch 1 oder 2, die neben Einheiten der allgemeinen Formel I auch Einheiten der allgemeinen Formel II aufweisen.

**4.** Wäßrige Emulsionen der aminofunktionellen Organopolysiloxane nach Anspruch 1 bis 3.

**5.** Verwendung der aminofunktionellen Organopolysiloxane nach Anspruch 1 bis 3 zur Ausrüstung von organischen Fasern und Textilien.

**Claims**

**1.** Amino-functional organopolysiloxanes which are built up from at least one siloxane unit of the general formula (I)

$$R^1_a Q_b SiO_{\frac{(4-a-b)}{2}} \quad (I)$$

and if appropriate siloxane units of the general formula (II)

$$R^1_c SiO_{\frac{(4-c)}{2}} \quad (II)$$

in which

$R^1$ is identical or different, monovalent, optionally fluorine-, chlorine- or bromine-substituted $C_1$- to $C_{18}$-hydrocarbon radicals, hydrogen atoms, $C_1$- to $C_{12}$-alkoxy or hydroxyl radicals or alkylglycol radicals,
Q is a group of the general formula (III)

$$-R^2-NR^3(CH_2)_m NR^4 R^5 \quad (III)$$

in which

$R^2$ is a divalent $C_1$- to $C_{18}$-hydrocarbon radical,
$R^3$ is a hydrogen atom or an optionally fluorine-, chlorine- or bromine-substituted $C_1$- to $C_{10}$-aSky- radical,
$R^4$ is an optionally fluorine-, chlorine- or bromine-substituted $C_1$- to $C_{10}$-alkyl radical,
$R^5$ is an optionally fluorine-, chlorine- or bromine-substituted $C_1$- to $C_{10}$-alkyl radical,
a has the values 0, 1 or 2,
b has the values 1, 2 or 3,
c has the values 0, 1, 2 or 3 and
m has the values 2, 3 or 4,

and the sum of a and b is not more than 3.

**2.** Amino-functional organopolysiloxanes according to Claim 1, in which

$R^4$ is a $C_2$- to $C_6$-alkyl radical and
$R^5$ is a $C_2$- to $C_6$-alkyl radical.

**3.** Amino-functional organopolysiloxanes according to Claim 1 or 2, which also contain units of the general formula II, in addition to units of the general formula I.

**4.** Aqueous emulsions of the amino-functional organopolysiloxanes according to Claim 1 to 3.

**5.** Use of the amino-functional organopolysiloxanes according to Claim 1 to 3 for the treatment of organic fibres and textiles.

## Revendications

**1.** Organopolysiloxanes aminofonctionnels, qui sont constitués d'au moins une unité siloxane de formule générale (I)

$$R^1_aQ_bSiO_{\frac{(4-a-b)}{2}} \quad (I)$$

et, le cas échéant, d'unités siloxane de formule générale (II)

$$R^1_cSiO_{\frac{(4-c)}{2}} \quad (II)$$

$R^1$ désignant des résidus d'hydrocarbures en $C_1$ à $C_{18}$, substitués, le cas échéant, par le fluor, le chlore ou le brome, univalents, identiques ou différents, des atomes d'hydrogène, des résidus alkoxy ou hydroxy ou alkylglycol en $C_1$ à $C_{12}$,
Q désignant un groupement de formule générale (III)

$$-R^2-NR^3(CH_2)_mNR^4R^5 \quad (III)$$

$R^2$ désignant un résidu d'hydrocarbure en $C_1$ à $C_{18}$ divalent,
R3 désignant un atome d'hydrogène ou un résidu alkyle en $C_1$ à $C_{10}$, substitué, le cas échéant, par le fluor, le chlore ou le brome,
$R^4$ désignant un résidu alkyle en $C_1$ à $C_{10}$, substitué, le cas échéant, par le fluor, le chlore ou le brome,
$R^5$ désignant un résidu alkyle en $C_1$ à $C_{10}$, substitué, le cas échéant, par le fluor, le chlore ou le brome,
a désignant les valeurs 0, 1 ou 2,
b désignant les valeurs 1, 2 ou 3,
c désignant les valeurs 0, 1, 2 ou 3 et
m désignant les valeurs 2, 3, ou 4, et

la somme de a et de b étant au maximum de 3.

**2.** Organopolysiloxanes fonctionnels selon la revendication 1, pour lesquels

$R^4$ désigne un résidu alkyle en $C_2$ à $C_6$ et
$R^5$ désigne un résidu alkyle en $C_2$ à $C_6$.

**3.** Organopolysiloxanes fonctionnels selon la revendication 1 ou 2, qui présentent également, outre des unités de formule générale I, des unités de formule générale II.

**4.** Emulsions aqueuses des organopolysiloxanes aminofonctionnels selon la revendication 1 à 3.

5. Utilisation des organopolysiloxanes aminofonctionnels selon la revendication 1 à 3 en vue du traitement de fibres et de textiles organiques.